# EUROPEAN PATENT APPLICATION

(11) **EP 2 007 104 A1**
(43) Date of publication of application: **24.12.2008**
(21) Application number: 07425385.7
(22) Date of filing: 21.06.2007
(51) Int. Cl.: H04L 29/06

(54) **Method for increasing the interface data traffic throughput within an umts radio access network**

(71) Applicant: Nokia Siemens Networks S.p.A., 20126 Milano (IT)
(72) Inventor: Fumagalli, Serigo, 20069 Vaprio D.Adda (IT); Panella, Giuseppe, 20133 Milano (IT)

(57) **Abstract**

Data traffic throughput across lub and lur interfaces inside an UTRAN is increased in both downlink and uplink directions by a method of transmission encompassing the following steps executed by an SRNC interfaced to a Node B directly (dual steps are executed for uplink):
- receive IP datagrams, incoming e.g. from browsing the WEB, segment each one into RLC PDUs, and buffer every RLC PDU for retransmission;
- link together in an unique block N RLC PDUs and lossless compress the unique block by a selected commercial compression algorithm, e.g. WinRAR;
- segment the compressed unique block into M segments and add a 2-byte fictitious header to each segment, possibly with in-band signalling;
- multiplex the compressed members into a set of MAC blocks (MACd and MAChs on HS-DSCH channels for HSDPA best effort service),
- map the set of MAC blocks onto the transport structure of the Frame Protocol;
- map the set of FP transport blocks onto dedicated channels DCH used for transmitting the compressed members to the NodeB, which performs opposite operations to restore the MAC blocks transmitted to the UE at the Uu radio interface. The RNC ciphers each compressed member before transmitting on the lub. The NodeB deciphers each one before being decompressed, and re-ciphers each RLC PDU obtained from decompression and segmentation (fig.8).

## Description

### FIELD OF THE INVENTION

The present invention relates to the wireless communications networks, and in particular to a method for increasing the interface data traffic throughput within an UMTS (Universal Mobile Telecommunication System) Radio Access Network (UTRAN). The invention is developed with specific attention paid to its possible use in third generation (3G) of UMTS standardized by 3GPP (3^{rd} Generation Partnership Program), but this should not be considered as a limitation considering that the invention could be used in whatever communications network having a radio access affected by as similar problems and drawbacks as those that will be highlighted.

The current reference texts for the main standards involved with the radio access networks are the following Technical Specifications (TS):
- 3GPP TS 23.060 - Version 7.4.0 (Release 7) - General Packet Radio Service (GPRS) Service description.
- 3GPP TS 25.301 - Version 7.1.0 Release 7) - Radio Interface Protocol Architecture.
- 3GPP TS 25.321 - Version 7.2.0 (Release 7) - Medium Access Control (MAC) protocol specification.
- 3GPP TS 25.322 - Version 7.4.0 (Release 7) - Radio Link Control (RLC) protocol specification.
- 3GPP TS 25.323 - Version 7.4.0 (Release 7) - Packet Data Convergence Protocol (PDCP) specification.
- 3GPP TS 25.427 - Version 7.4.0 (Release 7) - UTRAN lub/lur interface user plane protocol for DCH data streams.

A basic 3GPP activity is that of continuously updating the set of Technical Specifications (TS) issued for standardizing the UMTS networks. The following are useful definitions taken from 3GPP TR 21.905 - Vocabulary for 3GPP Specifications - Release 7:
- Bearer: A information transmission path of defined capacity, delay and bit error rate, etc. (in other words of defined Quality of Service (QoS)).
- Bearer service: A type of telecommunication service that provides the capability of transmission of signals between access points.
- Best effort service: A service model which provides minimal performance guarantees, allowing an unspecified variance in the measured performance criteria.
- Service Data Unit (SDU): In the reference model for Open System Interconnection (OSI), an amount of information whose identity is preserved when transferred between peer (N+1)-layer entities and which is not interpreted by the supporting (N)-layer entities (source: ITU-T X.200 /ISO-IEC 7498-1).
- Protocol data unit (PDU): In the reference model for OSI, a unit of data specified in one (N)-protocol layer and consisting of (N)-protocol control information and possibly (N)-user data (source: ITU-T X.200 / ISO-IEC 7498-1).

### BACKGROUND ART

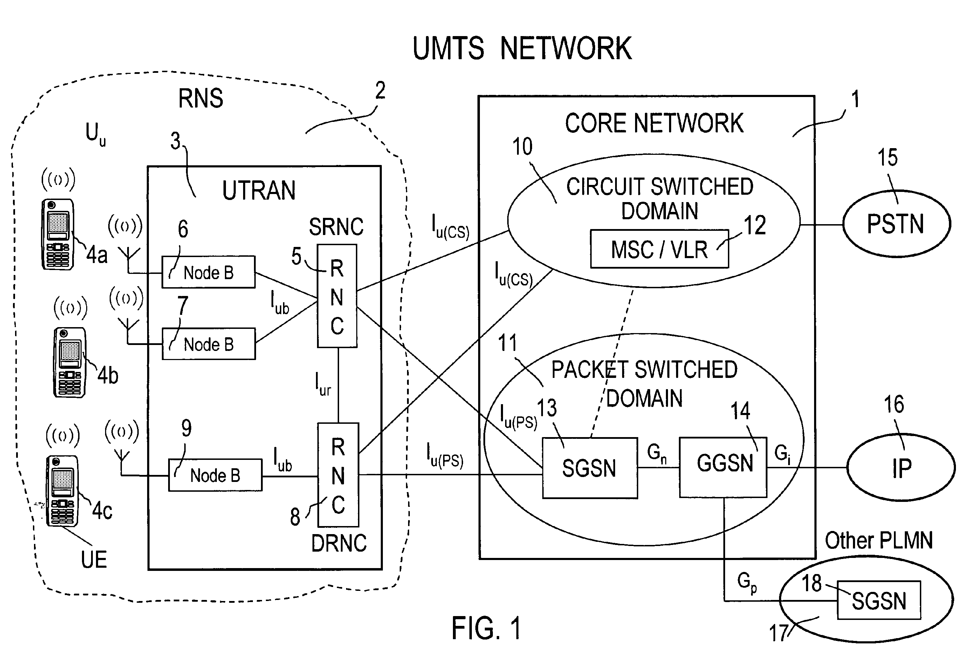

**Fig.1** schematizes an UMTS network constituted by a Core Network (CN) 1, (see TS 23.002) connected to a Radio Network Subsystem (RNS) 2 (see TS 23.110) that encompasses an UMTS Terrestrial Radio Access Network 3 (UTRAN - see TS 25.401) and a plurality of User Equipments (UE) 4a, 4b, and 4c with included respective USIM (UMTS Subscriber Identity Module) cards. The UTRAN 3 and the served UEs constitute the RNS 2. In its turn the UTRAN 3 includes some Radio Network Controllers (RNC) 5 and 8 and a plurality of fixed Base Stations called NodeBs 6, 7, and 9. Both RNCs 5 and 8 are connected to the Core Network 1 by means of respective lu(CS) Circuits Switched (CS) interfaces and lu(PS) Packet Switched (PS). The two RNCs 5 and 8 are interconnected through an internal lur interface. The core network 1 includes a CIRCUIT SWITCHED DOMAIN 10 and a PACKET SWITCHED DOMAIN 11 based on General Packet Radio Service (GPRS) further Enhanced as EGPRS. The domain 10 is connected to the Public Switched Telephone Network 15 (PSTN), and the domain 11 is connected to the IP (Internet Protocol) network 16 and to another Public Land Mobile Network (PLMN) 17. The circuit switched domain 10 includes the following Network Elements (NE) 12: Message Switching Centre (MSC) and Visitor Location Register (VLR) which together allow the wandering of users inside the network. The packet switched domain 11 includes two NEs known as Serving GPRS Support Node 13 (SGSN) and Gateway GPRS Support Node 14 (GGSN). The SGSN 13 is interfaced to the MSC / VLR and to the Home Location Register (HLR) to catch location information of the UEs in the packet switched domain. The RNCs 5 and 8 are interfaced to the MSC/VLR 12 through the lu(CS) interfaces and to the SGSN node 13 through the lu(PS) interfaces. The SGSN node 13 is further interfaced to the GGSN 14 node through the Gn interface. The GGSN node 14 is further interfaced to the IP network 16 through the Gi interface, and to another SGSN 18 inside the PLMN 17 through the Gp interface.

In the operation, the UMTS network of fig.1 is subdivided into contiguous service areas of more cells, each cell corresponding to the radio coverage area of a NodeB serving the camped UEs. A cluster of contiguous cells is served by a RNC which provides transport resources for packet transmissions to/from the Core Network. More in particular, the RNC 5 behaves as Serving RNC (SRNC) for both UEs 4a and 4b and , while the RNC 8 behaves as SRNC for the UE 4c and as Drift RNC (DRNC) for the UE 4b which is going to execute a handover from NodeB 7 to NodeB 9. An UE in idle state is traceable by broadcasting paging messages into its service area.

Each UE connected to the UMTS network is managed at the lu interface towards the CN by only one RNC: the SRNC, which serves as an access point to the CN in order to transmit data of the specific UE and allocate radio resources suitable for providing a service. If the UE moves into a region managed by a different RNC, it is connected to an SRNC by way of an DRNC of the region in which the UE has moved. The DRNC performs a simple partial function of routing user data assigning the requested resources over the air interface. That is, the discrimination of the SRNC and the DRNC is a logical discrimination related to a specific UE. In fact a DRNC for a given UE might play the role of SRNC for another UE. In the UTRAN structure each Node B necessarily has only one Controlling RNC (CRNC) which performs functions of controlling traffic load and congestion in a cell that the CRNC itself manages and a function of controlling acceptance of a new radio link set in the cell. The role of CRNC could also be assumed by DRNC or SRNC.

On the Uu radio interface the transmissions are based on Code Division Multiple Access (CDMA) technique. The CDMA technique implies that multiple signals can be transmitted in the same time interval and in the same frequency band, but separated in the code domain. The CDMA transmissions can be further based on TDMA (Time Division Multiple Access) technique. The TDMA technique implies that each frame is subdivided in a fixed number of timeslots, each of them conveys one or more orthogonal CDMA bursts, and different timeslots of the frame can be assigned to different users or alternatively to pilots or signalling channels. Two-ways transmissions are made possible by either Frequency Division Duplexing (FDD) or Time Division Duplexing (TDD). A non-limiting 3GPP system suitable to accommodate the invention is the Wiband CDMA (WCDMA) at 3.84 Mchips/s with 5 MHz bandwidth.

The UMTS network of fig.1 avails of a complex signalling encompassing a lot of protocols coordinated to each other to the aim of controlling and synchronize the information exchange across the various interfaces between network elements. Only in this way the user payloads can be correctly routed through the network and delivered to their destinations. According to the well consolidated OSI paradigm, whatever system of telecommunications can be described by a set of sub-systems placed within a vertical sequence (stack). A sub-system N, that consists of one or more layer entities N, interacts only with the sub-systems placed above and beneath. A layer entity N performs functions within the layer N it belongs to. For the communication among N entities of equal layer (peer entities) a protocol called peer-to-peer is used. The information unit that is exchanged through a peer-to-peer protocol is called N-PDU (N-Protocol Data Unit), it includes data and a N-Protocol Control Information (N-PCI). Entities of equal layer N communicate between them using the services supplied by the layer underneath. Likewise, the services of the layer N are supplied to layer N+1 at an N-Service Access Point (N-SAP). For the description of the interface between adjacent layers N and N+1, level-N primitives are introduced. A level-N primitive together with a N-Service Data Unit (N-SDU) are sent by the layer N to layer N+1, and vice versa, using to this purpose a level-N service protocol. Primitives and SDUs therefore enable the bi-directionality of the information flow along a stack.

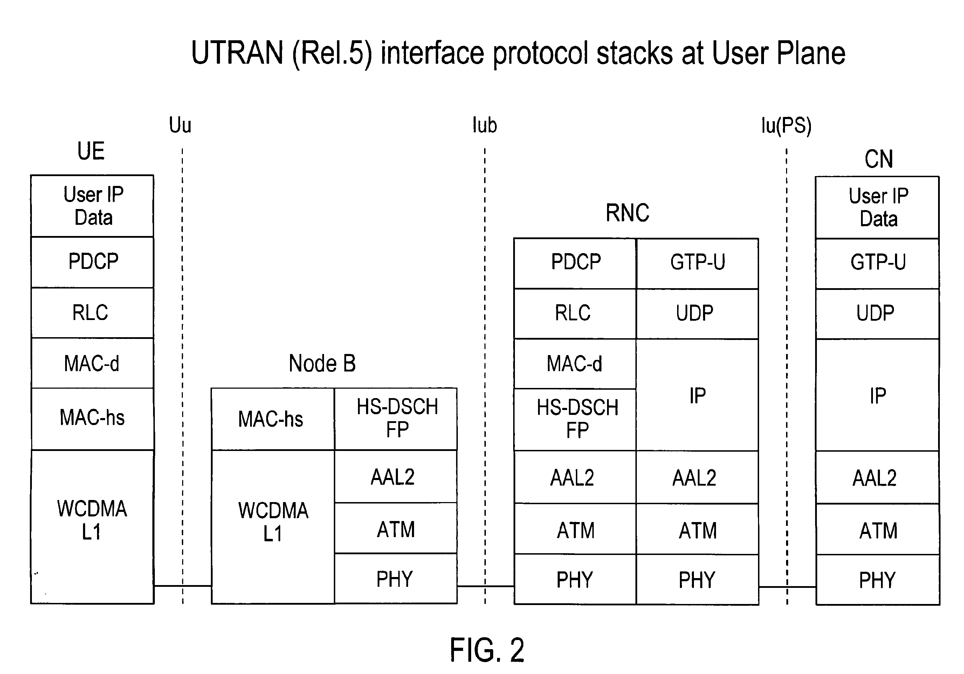

**Fig.2** shows the User Plane protocol stacks at Uu, lub, and lu(PS) interfaces of the UMTS of **fig.1****.** Without limitation, these stacks are referred to the Release 5 of W-CDMA that implements High Speed Downlink Packet Access (HSDPA) and High Speed Uplink Packet Access (HSUPA) in order to increment data traffic throughput across on air interface. From the scheduling point of view HSDPA and HSUPA are very suitable for conveying best effort services, such as WEB browsing by Internet Protocol (IP). HSDPA and HSUPA avail of High Speed Downlink Shared Channel (HS-DSCH) and Enhanced Dedicated Channel (E-DCH), respectively. These channels are shared between users that transmit according to Adaptive Modulation and Coding (AMC) to take advantage of favourable channel conditions. HDSPA and HUSPA services implement fast scheduling at NodeB, and Hybrid Automatic Repeat Request in case of incorrigible transmission errors are detected by the recipient. Hybrid is for Incremental Redundancy (IR) used to spare full retransmissions. Current bitrates for the HSDPA service are variable from 1.8 Mbit/s to 14.4 Mbit/s. Disregarding the peculiarity of the HSDPA and HSUPA services, similar protocol stacks at User Plane as the ones of **fig.2** were also used in the previous Release 99 of W-CDMA.

With reference to **fig.2****,** (where for simplicity the only HSDPA service is considered), the User Plane for Packet Switched of W-CDMA (3GPP TS 23.060) consists of a layered protocol which provides user data transfer and the associated features, e.g. flow control, error detection & correction and error recovery. Applications are handled by the UEs end-to-end. The higher layer protocols, e.g. IPv4, IPv6, PPP (Point-to-Point Protocol) or OSP (Octet Stream Protocol) are handled in the UE and GGSN (CN). More in detail:
Uu Radio Interface includes:
   - PDCP: The Packet Data Convergence Protocol (3GPP TS 25.323) maps higher-level characteristics onto the characteristics of the underlying radio interface protocols. It is used for compression of header information.
   - RLC: The Radio Link Control protocol (3GPP TS 25.322) provides logical link control. It is responsible e.g. for segmentation / re-assembly of higher layer PDUs, Block Error Correction (BEC) and ciphering of Non Real-Time (NRT) data, flow control, and transfer of acknowledged, unacknowledged or transparent buffered data controlled by QoS setting. The RLC provides RLC-PDUs to the MAC.
   - MAC: The Medium Access Control protocol (3GPP TS 25.321) performs multiplexing/demultiplexing of RLC-PDUs into/from transport block sets delivered to/from the physical layer on dedicated channels. MAC controls the access signaling procedures. It ciphers Real-Time (RT) data, switches between Common and Dedicated Channels. Traffic volume is measured at MAC layer and the results are reported to Radio Resource Control (RRC) layer in order to perform dynamic radio bearer control. In detail:
      - MAC-d is the MAC entity that handles the Dedicated Channel (DCH).
      - MAC-hs and MAC-d are implemented to deal with the HSDPA service. The MAC-hs is only used on the HS-DSCH, it provides Hybrid Automatic Repeat Request (HARQ) functionality.
      - There is one MAC-e entity in the Node B for each UE and one E-DCH scheduler function in the Node-B. The MAC-e and E-DCH scheduler handle HSUPA service specific functions in the Node B. There is one transport bearer set up per E-DCH MAC-d flow. MAC-d and MAC-e are implemented to deal with the HSUPA service.
   - L1: The physical layer (CDMA) is compliant with UTRA FDD or TDD mode (3GPP TS 25.2xx).
lu(PS) Interface includes:
   - GTP-U: The GPRS Tunneling Protocol across the Gn and Gp interfaces (3GPP TS 29.060, V7.5.1, Release 7) tunnels user data between UTRAN and the SGSN, and between SGSN and GGSN. All PDP PDUs are encapsulated by GTP.
   - UDP: The User Datagram Protocol (STD 0006 or IETF RFC 0768, August 28, 1980) is a fast transfer protocol without acknowledgements of data packets.
   - IP: Internet Protocol IPv4 /IPv6 (STD 0005 or IETF RFC 0791, September, 1981 and further updating) is used for routing user data between UTRAN and GGSN.
   - ATM / AAL2: Asynchronous Transfer Mode (ATM) and AAL2 (ATM Adaptation Layer) are used as Layer 2 to transmit data over fixed interfaces (lub, lur, and lu(PS)) in fixed-size cells. AALx are standardized in the ITU-T I.363.x series of Recommendations. The most commonly implemented are AAL1 (I.363.1), which supports isochronous transmission (circuit emulation, for example), AAL2 (I.363.2), which supports carrying of service data units with a variable source bit-rate, and AAL5 (I.363.5), which supports carrying packet data. AAL2 and AAL5 are the standardized ATM adaptation layers specified for use in the UTRAN and in particular AAL2 connections are used on the lu(PS), lur and lub interfaces for transport of UMTS user data.
   - Layer 1 on lu(PS) may include several E1/T1 flows (PCM 30/24 channels - see 3GPP TS 25.411) either wired directly or multiplexed into singular STM-1/STM-4 flows. Layer 2 and Layer 1 on the Gn interface are operator-dependent.
lub / lur Interface:
   - considering that MAC-d is terminated at the UE transparently to NodeB, and the Physical Layer is based on the ATM transport both at the lu(PS) and lub/lur interfaces, it follows that the stack of the lub interface at the SRNC includes the following protocol layers listed top-down: PDCP, RLC, MAC-d, HS-DSCH mapped into the frames of Frame Protocol (FP), AAL2, ATM, and PHY (e.g. STM-1/STM-4, SONET, E1/T1). Frame Protocol is described in 3GPP TS 25.427. The stack of the lub interface at the NodeB includes only the subset of: Frame Protocol, AAL2, ATM, and PHY (e.g. STM-1/STM-4, SONET, E1/T1). When there is some data to be transmitted, DCH data frames are transferred every Transmission Time Interval (TTI) from SRNC to NodeB for downlink transfer, and DCH/E-DCH data frames are transferred every TTI from NodeB to SRNC for uplink transfer.

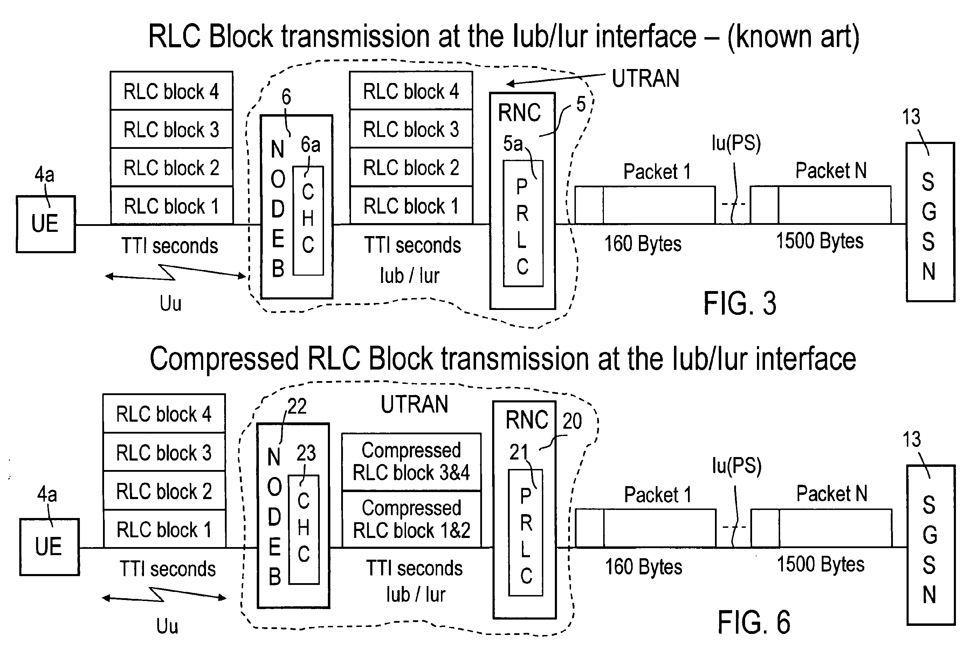

**Fig.3** shows diagrammatically the route of IP datagrams from the Core Network to the UE, and vice versa. With reference to the figure, and considering for simplicity the only downlink direction being the uplink almost completely dual, a sequence of IP datagrams: Packet 1,......, Packet N is transmitted from the SGSN 13 on the lu(PS) interface towards a PRLC (Processing-RLC) card 5a inside RNC 5. All IP packets directed downlink to the UE, for example because the user is downloading a web-browsing application on the UE screen, or because he is downloading some files, cross the PRLC card. The processing means hosted by this card perform a segmentation of each incoming IP packet according to RLC protocol rules and transmit these segments on the lub interface as a sequence of RLC blocks. For instance, IP Packet 1 (160 Bytes) is segmented into four RLC blocks 1 to 4 (40 bytes each block) and after having crossed the lower protocol layers are sent towards a CHC (Channel Control) card 6a inside NodeB 6, during TTI seconds. The four RLC blocks 1 to 4 are processed by the CHC card 6a according to the rules of both protocol stacks at the lub/lur and the Uu interfaces and then transmitted to the UE 4a.

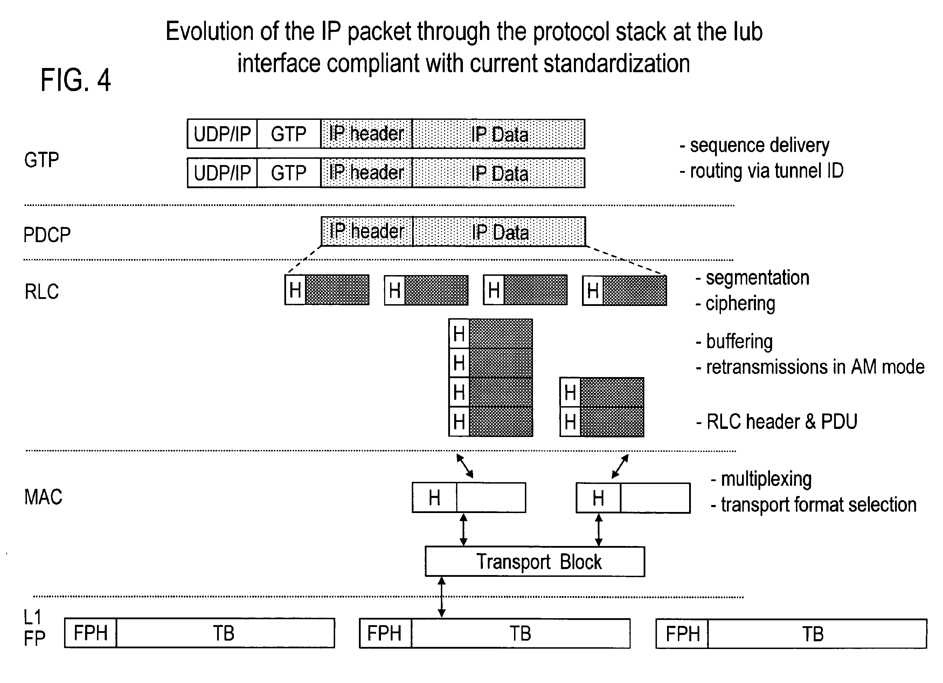

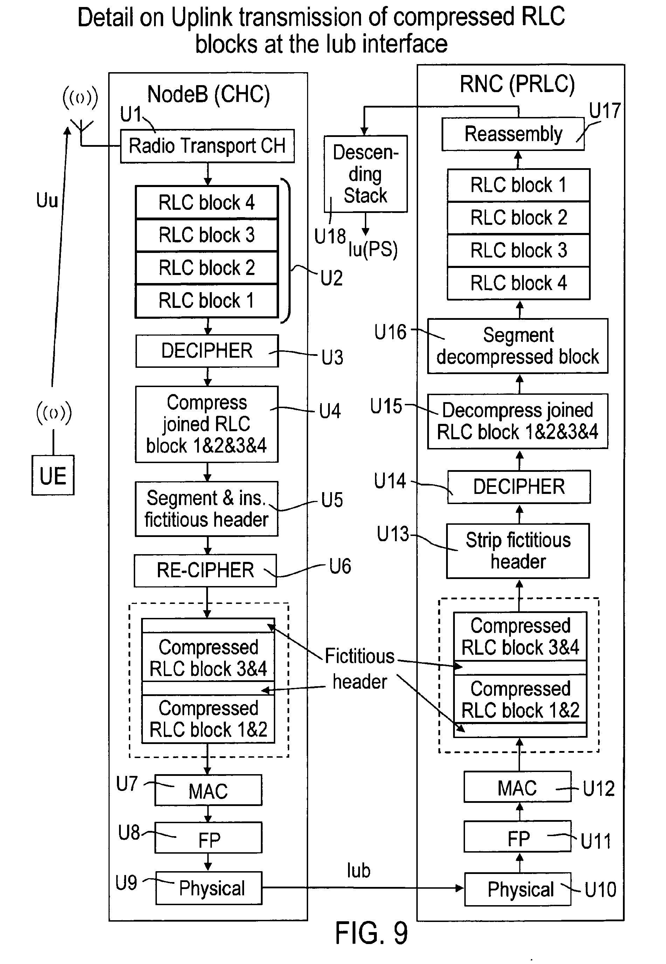

With reference to **fig.4** and focussing for the sake of simplicity on the downlink transmission from SRNC to the NodeB, we see that at top layer of the stack (fig.2) the IP packets incoming from the lu(PS) interface, as tunnelled by GTP-U, are received and delivered to the underneath PDCP layer. The IP packet is maximum 1,500 bytes long (Packet N), corresponding to the Maximum Transmission Unit (MTU) of IP size that an RNC supports..Each tunnelled IP packet includes an UDP/IP header, a GTP header, and an IP header followed by IP Data. These packets are buffered by the RNC and wait in a respective queue up to the scheduler is ready to transmit over the lub interface. In order to transmit these packets on the lub it is needed to put them in a form that the Ue can understand i.e. RLC blocks. The PDCP strips out the UDP/IP and GTP headers and optionally compresses the only IP header. The resulting datagrams each one constituted by the IP header (optionally compressed) followed by IP Data are delivered to the underneath RLC layer and the RNC performs the steps of:
- segmenting the IP packet into RLC blocks (PDUs) with fixed length of 320 bits comprised of RLC header and RLC SDU. For instance, a single connection of 384 kbit/s in downlink is considered at the physical layer. For this bearer the TTI is 10 ms, so that a maximum number of 12 x 40-bytes RLC blocks can be transmitted every 10 ms.
- Ciphering the segmented RLC block according to a selected algorithm. According to 3GPP TS 25.322: *"For RLC AM mode, the ciphering unit is the AMD PDU excluding the first two octets, i.e. excluding the RLC AMD PDU header".* Ciphering is initiated by the UE and terminated by RNC in uplink, while in downlink it is initiated by RNC and terminated by the UE.
- Buffering the ciphered RLC blocks into a queue ready for a possible retransmission in Acknowledged Mode (AM).
- multiplexing the ciphered RLC PDus into MAC SDUs and adding a MAC Header. In the preferred embodiment of fig.2 MAC-d is used for implementing the HSDPA service (but also for HSUPA). In this case the MAC-d PDUs are conveyed through HS-DSCH channels relevant to the underneath MAC-hs layer. As represented in 3GPP TS 25.301, figure 9a, the MAC-hs PDU encompasses a MAC-hs Header, followed by a number of MAC-hs SDU, and terminating with a Cyclic Redundancy Check (CRC) string. Each MAC-hs SDU includes one MAC-d PDU which fir the MAC-hs SDU exactly. Each MAC-hs PDU constitutes a transport block of MAC.
- Selecting a transport format for the MAC (MAC-hs) PDUs. In the present case MAC PDUs are multiplexed into Frame Protocol (FP) Transport Blocks (TB).
- Adding an FP Header to each Transport Block of assigned length to be delivered to the AAL2 layer.
- Segmenting the FP PDUs into ATM cells and then into the E1/T1 frames transmitted at the PHY layer of lub interface towards the NodeB.

Although not represented in the figures, the NodeB connected downlink to the other end of the lub/lur performs dual operations in respect of RNC. In detail, the NodeB performs the steps of:
- receiving the ATM cells by the PHY layer and delivering them to the AAL2 layer to be assembled into Frame Protocol Transport Blocks.
- demultiplexing the Frame Protocol Transport Blocks into corresponding MAC-hs PDUs.
- delivering the MAC-hs PDUs to the WCDMA physical layer to be transmitted as radio blocks over the Uu interface.

Although not represented in the figures, the UE connected downlink at the Uu radio interface performs dual operations in respect of both Node B and SRNC. In detail the UE performs the steps of:
- receiving the MAC-hs PDUs from the WCDMA physical layer as radio blocks over the Uu interface.
- Performing the CRC on each received MAC-hs PDU and in case of error detection request a retransmission by the activation of a relevant signalling message.
- demultiplexing correctly received MAC-hs SDUs into corresponding MAC-d PDUs.
- demultiplexing MAC-d SDUs into corresponding RLC PDUs.
- reassembling the RLC SDUs into corresponding IP datagrams and, in case, decompress the IP header.
- Delivering the IP datagrams to the user Application program (e.g. WEB browser).

The description provided for the downlink can be used to describe the uplink by simply considering dual operations and the relevant Technical Specifications for HSUPA.

### OUTLINED TECHNICAL PROBLEM

Currently, the high cost of connections at transport layer is the main hindrance to the transfer of high amount of data through the Radio Access Network. Consequently, many network operators are in trouble to introduce new services, the fully support of them would need to expand the actual transport resources. World wide operators are focusing on this matter and they are trying themselves to reduce the transport costs in the following manners:
- Increasing the number of physical links at the lub/lur interface (e.g. the number of E1 link at 2.048 Mbit/s), but the connectivity is going to be saturated especially now that the HSDPA technology has been deployed and there are services up to 14.4 Mbit/s.
- Tuning some internal parameters of the UTRAN in order to admit more traffic, in that however reducing the QoS of the packet services especially for the interactive or background ones.

These remedies have the aforementioned drawbacks, so a satisfactory solution is apparently far to be found. For completeness, it needs to say that a third way exists, it is the RLC header compression generally carried out by PDCP at Level 3. This feature consists of including several Payload Units into one RLC PDU. RLC header compression can be applied for acknowledged data transfer service. Its applicability shall be negotiable between network and UE. Application of RLC header compression is optional for the Network but it shall be supported by the UE mandatory. The Network exploits RLC header compression by means of algorithms working on the header of IP datagrams at layer 3 and/or the header of ATM cells at layer 1. The UE exploits RLC header compression only directed to the header of IP datagrams at layer 3. The RLC header compression, and hence the IP datagram header compression, has been up to now exploited not properly to face with the increasing requests of more traffic at the lub, which is a relatively recent need, but for the purposes that will be illustrated hereafter. According to IETF RFC 2507, February 1999, header compression mechanisms are mainly intended for point-to-point links. The IP Headers that can be compressed include TCP, UDP, IPv4, and IPv6 base and extension headers. the aims of Header compression are the following:
- Improve interactive response time.
- Allow using small packets for bulk data with good line efficiency.
- Allow using small packets for delay sensitive low data-rate traffic.
- Decrease header overhead.
- Reduce packet loss rate over lossy links.

The general principle of header compression is that to occasionally send a packet with a full header; subsequent compressed headers refer to the context established by the full header and may contain incremental changes to the context. Only fields that change often and randomly, e.g., checksums or authentication data, need to be transmitted in every header.

In conclusion. the IP Header Compression (so as ATM) is a feature currently implemented in the UMTS networks, e.g. by PDCP at User Plane; notwithstanding that the highlighted limitation of the existing installations due to the incapacity of facing a continuously increasing request for higher traffic throughputs at the Radio Access Network interfaces still remains.

### OBJECT AND SUMMARY OF THE INVENTION

An object of the invention is that to overcome the defects of the prior art and indicate a method to increase the throughput across the interfaces of a radio access network without any impact on the quality of service of the in transit bearers.

The invention achieves said object by providing a method to increase data traffic throughput across internal interfaces of a radio access network accessed by the subscriber stations to exchange application data and signalling with the core network of a cellular communication system according to structured interface protocols, wherein a first network element inside the radio access network (3) buffers every incoming application datagram segmented into protocol data units of a radio link control protocol, and said first network element executes the steps of:
a) linking together a first number of protocol data units into an unique block;
b) lossless compressing the unique block according to a selected compressing algorithm;
c) segmenting the compressed unique block into a second number of segments and add a fictitious header to each segment obtaining in such way a second number of compressed members;
d) multiplexing the compressed members into a set of transport blocks of assigned format;
e) mapping the set of transport blocks onto dedicated channels used for transmitting said compressed members, to a second network element interfaced to the first network element inside the access network, as disclosed in claim 1.

According to the method of the invention, the following steps are executed by the second network element:
f) demultiplexing the compressed members from every set of transport blocks conveyed by dedicated channels;
g) stripping out the fictitious header from every compressed member;
h) joining together the second number of compressed members without fictitious header;
i) decompressing the compressed unique block;
j) subdividing the unique block into the first number of protocol data units;
k) multiplexing the protocol data units into a set of transport blocks of assigned format;
1) mapping the set of transport blocks onto dedicated channels used for transmitting said protocol data units to a third network element.

Further object of the invention is a radio access network operating according to the method described above, as disclosed in the relevant claims.

The greater the traffic throughput within the radio access network, the greater it will be between the core network and the subscribers, to great benefit to all network operators..

The method of the invention has the generality to encompass the two directions of transmissions, namely, downlink from the core network to the UE and uplink from the UE to the core network. Besides, the ciphering/deciphering functionality is considered as optional, thus for a more generality of the invention it is initially ignored and only successively introduced with reference to dependent claims.

Considering the downlink direction in a 3GPP UTRAN, it follows that:
- lub or lur is the relevant interface.
- SRNC or DRNC plays the role of the first transmitting network element.
- NodeB or DRNC plays the role of the second network element.
- UE or NodeB is the third network element.
- RLC blocks are used in step a) to convey the protocol data units, and the SRNC/DRNC provides segmentation of every IP datagram into RLC blocks.
- Compression doesn't involve the channel coding bits for error protection on the lub/lur that is assured by lower layer on the Frame Protocol.
- MAC (MAC-d and MAC-hs with HS-DSCH) protocol is used in step d), with MAC blocks mapped onto Transport Blocks of the Frame Protocol.
- Transport Blocks of Frame Protocol are mapped in step e).
- Protocol data units obtained at step j) have to be multiplexed into respective MAC sets (MAH-hs) of transport blocks, then mapped onto dedicated channels (DCH) of the physical layer (W-CDMA) for transmissions at the Uu interface.

Considering now the uplink direction in a 3GPP UTRAN, it follows that:
- lub or lur is the relevant interface.
- NodeB or DRNC plays the role of the first transmitting network element.
- SRNC or DRNC plays the role of the second network element.
- SGSN or SRNC is the third network element.
- Before step a) MAC blocks (MAC-e and MAC-d) shall be demapped from the dedicated channel (E-DCH) conveyed by the incoming radio signal.
- The remaining steps are the same as the downlink with the exception that: MAC (MAC-d and MAC-e with E-DCH) are used in step d).

As a variant of the invention steps b) and c) could be joined into a single compression step with the AES (Advanced Encryption Standard) algorithm. In any case the compression delay is lower than the frame duration because of the simple processing performed on the sequence of bits; and this is particularly true for the 10 ms TTI. As a consequence, a slowing down in Real-Time (RT) traffic is not perceived and the bearer QoS is maintained. The preferred used of the invention is for the best-effort QoS class service, such as HSDPA/HSUPA..

Profitably, the HARQ functionality at the RNC layer is preserved by the proposed solution. That because in case of errored received radio blocks the UE requests retransmission of uncompressed PDUs that are queued by RLC inside the RNC. This should be impossible if the compression of the whole IP packet (header plus payload) had been shifted to the SGSN at the lu interface.

It can be appreciated that up to now a Layer 2 Compression of RLC blocks at the lub/lur interface seems never conceived in the art. In any case, the expected spared bandwidth will be significant because the novel L2 compression involves both Header and payload bits (also the IP datagrams already submitted to header compression).

Considering now the addition of ciphering/deciphering in downlink (we remind that deciphering is executed by the UE), the following step shall be added:
- ciphering the compressed members with the exclusion of fictitious header, immediately after the segmentation step c);
- deciphering the compressed members with the exclusion of fictitious header, immediately after step h);
- re-ciphering the first number of protocol data units, immediately after step j).

Since ciphered compressed members are transmitted across the lub interface and not simple compressed members, the deciphering step is needed to achieve a correct decompression. The re-ciphering of decompressed protocol data units restores the initial ciphering to the UE.

Considering the addition of ciphering/deciphering in uplink (we remind that ciphering is executed by the UE), the following step shall be added:
- deciphering the first number of protocol data units, before step a);
- re-ciphering the compressed members with the exclusion of fictitious header, immediately after the segmentation step c);
- deciphering the compressed members with the exclusion of fictitious header, immediately after step g).

Since ciphered protocol data units are transmitted across the Uu radio interface and not simple protocol data units, the deciphering step is needed to achieve a correct compression. Re-ciphering the compressed members allows ciphered transmission on the lub interface. Deciphering the compressed members is needed to obtain correct decompression.

According to the current standardization, the ciphering key is communicated by the core network to the RNC and by the latter to the UE, transparently to NodeB. So departing from standardization is needed to deploy the combined ciphering/deciphering and compression/decompression scheme. According to the present invention NodeB shall be acquainted with the key by means of provided signalling. In-band signalling exploits the fictitious headers of compressed members to include the ciphering key. The out of-band signalling makes use of a new message at control plane named "TRANSMIT CIPHERING KEY".

More detailed explanation of single steps **a)** to **e)** is provided hereafter.

As known in the art of compression algorithms, some extra information, such as: an information header, timestamps, CRC, etc., shall be added to each block of data submitted to every known lossless compression algorithm in order it work correctly (e.g. 71 bytes of header are used by WinRAR). Joining step **a)** has been introduced just for reducing the overhead of said extra information added to the single block before being compressed.

Compression step **b)** comes before ciphering (when used) otherwise the efficiency of compression algorithm should be strongly reduced due to the high degree of randomization of the ciphered data flow. The kind of compression algorithm that should be used has to take into account the complexity in terms of requested processing power and the percent of the compression. It has to be of course a lossless compression algorithm i.e. without lost of information. The length of the compressed RLC blocks is variable depending on the variability of the input bits. NodeB has to decompress the received RLC blocks and transmit them to the UE as usual. Also here the price to pay is the increasing of the processing power of the CHC card inside to NodeB.

Segmentation step c) shall generate compressed members having a format similar to the format of the RLC blocks so as to preserve the compatibility with MAC used in the successive step **d).** To this aim the length of the uncompressed PDU is optionally maintained for the compressed members, two bytes of fictitious header are added to each one (reducing in this way a little bit the compression gain). Fictitious header may be used to convey information useful for the decompression entity. The file reduction ratio of the compression algorithm can be assumed as the ratio between the lengths of compressed and uncompressed file. The compression gain is the inverse of reduction ratio and it depends on statistical behaviour of traffic, other than the skill of the selected algorithm. Greatest compression gains come up when bits are each other strongly correlated, so that there is a lot of redundancy that can be removed during the TTI. In the most favourable cases a shortening of more than 70% can be obtained, and the manageable traffic load is increased of equal measure.

Disregarding the theoretical best case (having the Shannon's upper bound compatibly with the TTI duration), simulations of some real scenarios have been performed in order to test the method of the invention with a commercial WinRAR compression / decompression algorithm. Some IP traffic load indicators have been traced at the lu interface for traffic generated DL and UL with different traffic models. The results confirm that the lengths of transmitted sequences of data are always reduced from a minimum of 25% to a maximum of 45%. These result constitutes an undoubted advantage and a positive answer to the actual needs of network operators.

A possible use with future releases of 3GPP UTRAN should be preferable and for this aim the teaching of the invention will be proposed to 3GPP. It is left to standardization representatives to submit right Change Request of both 3GPP TS 25.322 and TS 25.427 for being extended to 3G accordingly. In any case the proposed solution should be considered as optional and the compatibility with the existing installation shall be always maintained. The present invention is usable on the lub or lur interface, indifferently. The compatibility is not a problem if all RNCs and NodeBs inside the whole UTRAN are embodying the teaching of the invention, otherwise the interoperability with different non-compliant manufacturers must be assured. To this purpose some alternatives will be described to signal that the compression is stopped after an lur Handover with a non-compliant Drift RNC (DRNC).

Profitably, the method of the invention is transparent to both the core network and the UEs and the only core network experiments an increase in data traffic throughput.

### BRIEF DESCRIPTION OF THE DRAWINGS

The invention and its advantages may be understood with reference to the following detailed description of an embodiment thereof taken in conjunction with the accompanying drawings given for purely non-limiting explanatory purposes and wherein:
- **fig.1** shows the general diagram of a 3GPP UMTS network;
- **fig.2** shows the protocol stacks at the various interfaces of the UMTS network of fig.1, in particular for HSDPA best-effort packet traffic;
- **fig.3** shows diagrammatically the route of IP datagrams from the Core Network to the UE, and vice versa, as being segmented into RLC blocks across the lub / lur and Uu interfaces of fig.2;
- **fig.4** shows diagrammatically the change in the structure of IP datagrams from the Core Network to the UE, as being segmented into compressed RLC, MAC, and FP blocks across the lub / lur interface of fig.2;
- **fig.5** shows the structure of a RLC for AMD PDU reported from 3GPP TS 25.322;
- **fig.6** shows diagrammatically the route of the datagrams from the Core Network to the UE, and vice versa, as being segmented into compressed RLC blocks across the lub / lur interfaces and uncompressed RLC blocks across the Uu interface, according to the method of the invention;
- **fig.7** shows the structure of a compressed RLC PDU across the lub / lur interface;
- **fig.8** shows in detail the sequence of steps of the route of fig.6 for downlink transmissions;
- **fig.9** shows in detail the sequence of steps of the route of fig.6 for uplink transmissions.

### DETAILED DESCRIPTION OF AN EMBODIMENT OF THE INVENTION

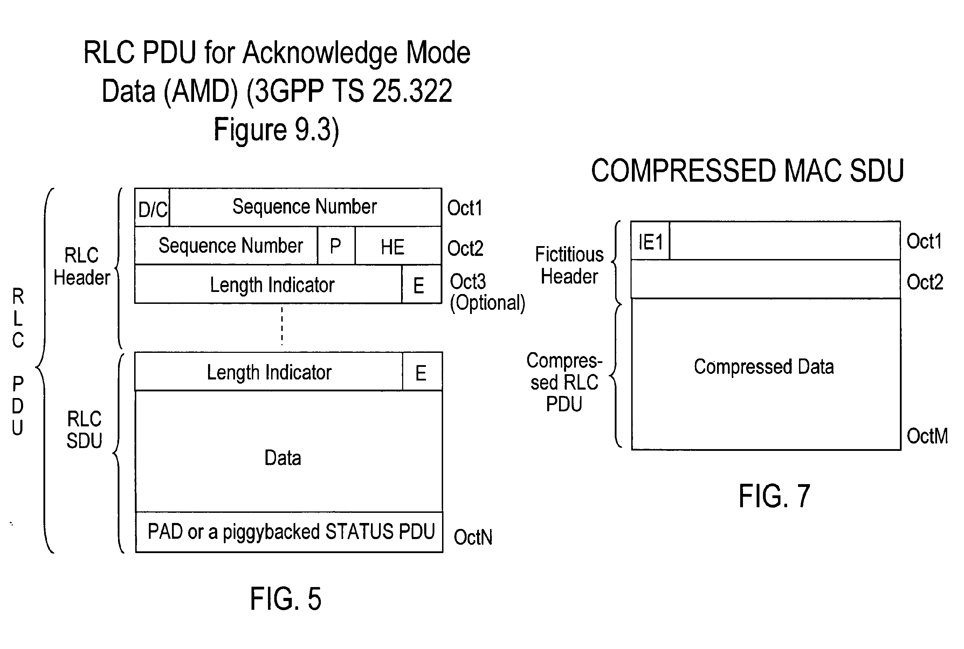

The description of the invention will be based on the introduction of few new additional steps to the detailed description provided before with reference to the already commented **Figures 1** to **4** and the new **figures 5** to **9** that will be commented hereafter. For completeness, another known element will be illustrated as being the subject of the novel steps, and this is the RLC PDU, for instance the one visible in **fig.5** reported from 3GPP TS 25.322 (Figure 9.3) for the Acknowledge Mode Data (AMD). This RLC PDU comprises an RLC header and a RLC SDU. The RLC Header is at least two bytes long, Oct1 and Oct2, optionally the header includes a further number of bytes indicated in the field "Length Indicator" of a third bytes Oct3 that includes the Extension bit (E). In detail for the header:
- D/C field (1 bit) indicates either a Control PDU or an AMD PDU.
- Sequence Number (SN = 12 bits) indicates the sequence number of the PDU, encoded in binary, that s used for retransmission and reassembly.
- Polling bit (P = 1 bit) is used to either request or not request a Status Report from the receiver RLC.
- Header Extension Type (HE = 2 bits): "00" indicates that succeeding octet contains data; 01 indicates that the succeeding octet contains a Length Indicator and Extension bit (E); 10 or 11 are reserved and the PDUs with this coding will be discarded by this version of the protocol.

The RLC SDU includes Data of payload. The first byte of RLC SDU includes "Length Indicator" and the Extension bit (E). The field "Length Indicator" is used to indicate the last octet of each RLC SDU ending within the PDU. Normal E-bit interpretation is the following: logic value "0" = the next field is data, piggybacked STATUS PDU or padding; logic value "1" = the next field is Length Indicator and E bit. The STATUS PDU is used to exchange status information between two RLC AM entities.

**Fig.6** shows diagrammatically the route of IP datagrams from the Core Network to the UE, and vice versa, according to the method of the present invention. With reference to the figure, the only perceptible difference in respect of **fig.3** is the presence of Compressed RLC blocks over the lub/lur interface instead of the usual uncompressed ones. More in particular, an IP Packet 1 (160 bytes long) transmitted on the lu(PS) interface reaches a modified PRLC card 21 inside the RNC 22. This card performs a segmentation of each incoming IP packet according to RLC protocol rules into four RLC blocks 1 to 4 (40 bytes each one). The four RLC blocks are joined together and then compressed spanning the space of two compressed RLC blocks (1 &2 and 3&4) during the same TTI, so that a 100% compression gain it would be had to get in this exemplary case. More in general the length of the compressed RLC blocks is variable depending on the variability of the input bits and 100% compression gain is hard to be obtained without worsening the QoS. The compressed RLC block (1&2, 3&4), is put in the condition of being transmitted over the lub/lur interface towards a CHC card 23 inside NodeB 22. The CHC card decompresses the received compressed members (80 bytes total) in order to obtain the four initial RLC blocks (160 bytes total). The four RLC blocks 1 to 4 are further processed by the CHC card 2 according to the rules of both protocol stacks at the lub/lur and the Uu interfaces and then transmitted to the UE 4a. Profitably, the spared band at the lub/lur interface is made available to the scheduler to plan other transmissions on the same amount of physical lines.

**Fig.7** shows the structure of a compressed member, called for mere convenience "compressed RLC block" in the previous description. The compressed member is constituted by two bytes of fictitious header Oct1 and Oct2, introduced to preserve the compatibility with MAC Protocol, followed by compressed Data up to the last octet OctM. A field IE1 is indicated in the first byte of fictitious header for signalling purposes that will be clarified.

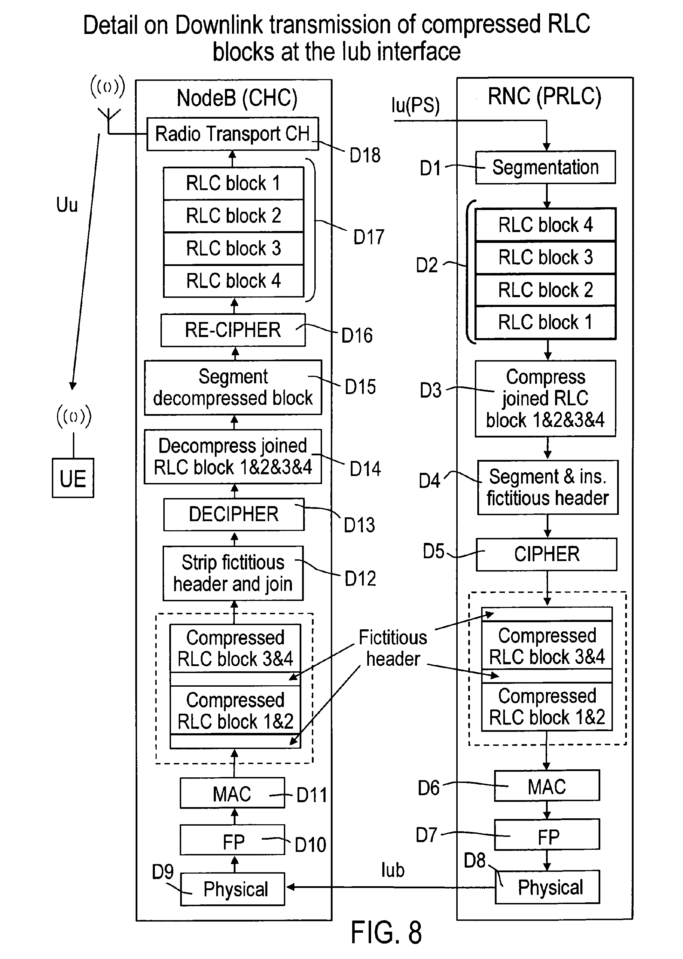

**Fig.8** shows in detail the method of the invention applied to downlink transmissions. The method is subdivided in two parts:
- a first one is carried out by the RNC (steps **D1** to **D8)** concerns the compression of RLC PDUs before transmission at one end of the lub/lur interface;
- the second one carried out by NodeB (steps **D9** to **D18)** concerns decompression of the compressed members received at the other end of the lub/lur interface and the successive processing to predispose the RLC PDUs for the transmission through the Uu radio interface.

With reference to **fig.8****,** and the preceding figures, the following steps are executed by the RNC 20 (fig.6), and more in particular by the processing means of the PRLC card 21. In the first processing step **D1** the PRLC card 21 receives at the lu(PS) side one ore more IP datagrams (IP PDU) which have been previously tunnelled by the GTP-U protocol running in the SGSN 13. The received IP datagrams (packets) are submitted to the convergence protocol PDCP for de-tunnelling the IP packets and to perform, optionally, the IP header compression. Successively the IP packets are submitted to the RLC protocol layer for being adapted to the transmission on the radio path. At this layer every incoming IP PDU is subdivided into a convenient number of segments, eventually concatenated, and a RLC Header is added to each segment obtaining a RLC PDU, usually 40 byte long.

In step **D2** the RLC PDUs are temporarily stored in a buffer memory to allow future retransmissions, if requested by the UE in case a RLC PDU is received with error or is not received at all. In successive processing step **D3,** basing on the characteristics of the compressor and the duration of TTI, a certain number N of RLC PDUs is joined together to form an unique block submitted to a lossless compression algorithm. Without limitations, the following commercial ones might be used: ZIP, WinZIP (ZIP for Windows), GZIP, PKZIP, Bzip2, LZ77, LZ78, LZW, DEFLATE, WinRAR (RAR for Windows), ARJ, PPM, BWT, etc. The degree of compression depends on the smartness of the selected algorithm in modelling and removing the redundancy intrinsically included in the data source, either text, sound, or pictures. So, files of random data cannot be consistently compressed by any conceivable lossless data compression algorithm. DEFLATE uses a combination of the LZ77 algorithm and Huffman coding. It was originally defined by Phil Katz for version 2 of his PKZIP archiving tool, and was later specified in IETF RFC 1951, May 1996. Data can be produced or consumed, even for an arbitrarily long sequentially presented input data stream, using only an a priori bounded amount of intermediate storage. WinRAR is a shareware file archiver and data compression utility designed by Eugene Roshal (so RAR is for Roshal ARchive). RAR compression operations are typically slower than compressing the same data with early compression algorithms like ZIP and GZIP, but a much better rate of compression is achieved whenever the data can still be compressed further.

In step **D4** the compressed unique block is segmented into a number M of segments, and a 2-bytes fictitious header is added to each segment, so obtaining M compressed members having the structure represented in **fig.7****.** According to an embodiment of the invention the field IE1 of fictitious header is used for indicating to the recipient that successive RLC block is either compressed or uncompressed; in the latter case for example because the length of input data is lower than a convenience compression threshold. Similarly, the remaining bits of fictitious header are used to convey useful information about the compression (e.g. the key). This embodiment needs a preliminary synchronization between the compressing and decompressing entities, e.g. both entities must agree that the first transmitted RLC PDU is always compressed. The limitation is that both transmitting and receiving entities shall be compliant with compression mode at the lub/lur. An alternative embodiment without this limitation will be described soon.

In step **D5** the compressed members are ciphered, with the exception of fictitious header, according to a given ciphering algorithm accessible by the current 3GPP standardization.

In step **D6** the ciphered compressed members are multiplexed into a set of MAC blocks of assigned format. In step **D7** the set of MAC blocks are mapped into the transport structure (Transport Blocks) of Frame Protocol (FP). The spare bits of the FP header can be used to convey the same signalling as said for the IE1 field. Using spare bits for signalling the compressed / uncompressed state of the next RLC PDU is an embodiment also valid for those network nodes non-compliant with the compression at the lub/lur. It only needs that all of them agree about one spare bit be used for this purpose.

In step **D8** the AAL2 protocol segments the FP Transport Blocks relevant to ciphered compressed members and maps the segment into sequential ATM cells. The latter are in their turn mapped to sequential timeslots of the 32-channel frames of type-E1 lines at 2.048 Mbit/s, constituting the physical layer at the lub interface.

The following steps are executed by the NodeB 22 and more in particular by the processing means of CHC card 23 (fig.6). In the processing step **D9** the CHC card 23 receives at the lub/lur interface the ciphered compressed members transmitted by the RNC 20 on the E1 lines. The CHC card completes in sequence the steps **D9, D10,** and **D11** that are dual of steps **D8, D7,** and **D6** in the order. During step **D10** the spare bits of the FP header are analyzed to detect a possible presence of signalling about the compressed / uncompressed state of successive RLC PDU. In case an uncompressed state is signalled, the CHC skips steps **D12** to **D16.** In the successive MAC processing step **D11** the M ciphered compressed members, each one with the structure of **fig.7****,** are obtained. In the processing step **D12** the fictitious headers are stripped from each ciphered compressed member and a possible presence of in-band signalling is detected in order to behave accordingly. Then the M ciphered compressed members without fictitious header are deciphered in step **D13.** In the successive step **D14** the M ciphered compressed members are joined together to form an unique compressed block, which is submitted to the decompression algorithm. In step **D15** the decompressed unique block is segmented into N RLC PDUs. In step **D16** each RLC PDU is re-ciphered with the exception of fictitious header. In step **D17** the N ciphered RLC PDUs are multiplexed into MAC blocks, which are mapped in their turn into dedicated channels transmitted over the Uu radio interface in step **D18.**

**Fig.9** shows in detail the method of the invention applied to uplink transmissions. The method is subdivided in two parts:
- a first one carried out by the NodeB (steps **U1** to **U9)** concerns the compression of RLC PDUs before transmission at one end of the lub/lur interface;
- the second one carried out by the RNC (steps **U10** to **U18)** concerns decompression of the compressed members received at the other end of the lub/lur interface and the successive processing to predispose the RLC PDUs for the transmission at the lu(PS) interface.

With reference to **fig.9****,** and the preceding figures, the following steps are executed by the NodeB 22 (fig.6), and more in particular by the processing means of the CHC card 23. In the first processing step **U1** the CHC card 23 receives at the Uu interface of UTRA FDD or TDD a sequence of RLC PDUs, conveyed via MAC transport blocks mapped onto dedicated channels (DCH) of WCDMA. In step **U2** the RLC PDUs are stored in a buffer memory. In the successive step **U3** the incoming RLC PDUs transmitted by the UE (ciphered) are deciphered. In step **U4** the deciphered RLC PDUs are joined together to form an unique block, then compressed as previously said. In the subsequent step U5 the compressed unique block is segmented and a fictitious header is added to each segment in order to obtain a compressed member. The fictitious header is used to convey information as said for downlink. In step U6 the compressed members are re-ciphered on individual basis, with the exception of fictitious header. In subsequent steps **U7** to **U9** the ciphered compressed members are submitted, in the order, to the MAC and Frame Protocol and then mapped onto dedicated channels to be transmitted on the lub interface.

Steps **U10** to **U12** are reciprocal of the previous steps **U9** to **U7.** In step **U8** some spare bits of Frame Protocol are used to convey useful signalling about compression. In step **U11** this signalling is extracted and analyzed. In step **U13** the fictitious header is stripped out from each received compressed member and a possible presence of in-band signalling is detected in order to behave accordingly. In step **U14** the compressed members without fictitious header are deciphered. In the subsequent step **U15** the resulting compressed members are joined together to form an unique block which is submitted to the decompression algorithm. In step U16 the unique block so obtained is segment into N RLC PDUs. In step **U17** the RLC PDUs are reassembled into the IP Packet In step **U18** the IP Packet crosses in descent order the protocol stack visible at the lu(PS) interface **of** **fig.2** and is transmitted to the Core network.

We remind that in case of HSDPA service in downlink **(****fig.8****)** and HSUPA service in uplink **(****fig.9****)** certain functions concerning transparent / non-transparent (unacknowledged / acknowledged) transmissions are shifted from RLC to MAC, but these differences are immaterial for data compression / decompression according to the method of the invention.

In the following we suppose to transmit a sequence of S1, S2, ......, SN RLC blocks (PDU). After joining, compression, and segmentation we obtain a sequence of C1, C2, ......, CM compressed blocks. The same is repeated for SN+1, SN+2, ......, S2N to obtain CM+1, CM+2, ......, C2M. At the reception side the compressed sequence C1, C2, ......, CM is received and opposite operations are performed. After joining, decompression, and segmentation we obtain the starting sequence of S1, S2, ......, SN RLC blocks. The same is repeated for CM+1, CM+2, ......, C2M to obtain SN+1, SN+2, ......, S2N. Suppose that N = 100 RLC blocks (each 42 byte long) for a total of 42 x 100 = 4,200 bytes. Assuming a compression ratio of 50% we obtain 2,100 bytes at the output of the compressor, to say 42 x 50 = 2,100 bytes and M = 50 compressed blocks. In order to preserve the compatibility with MAC layer, a fictitious header 2 byte long has to be added to each one of the M compressed blocks, for 2 x 50 = 100 bytes overall header. So we obtained a total of 2,100 + 100 = 2,200 bytes for the fictitious RLC flow transmitted across the lub towards the decompression algorithm. It can be notice that M/N = 0.5 is the reduction ratio of the length of the compressed sequence

Although the invention has been described with particular reference to a preferred embodiment, it will be evident to those skilled in the art, that the present invention is not limited thereto, but further variations and modifications may be applied without departing from the scope of the invention as defined by the annexed claims.

## Claims

1. Method to increase data traffic throughput across internal interfaces (lub, lur) of a radio access network (3) accessed by the subscriber stations (4a, 4b, 4c) to exchange application data and signalling with the core network (1, 13, 14) of a cellular communication system according to structured interface protocols, wherein a first network element (20, 22) inside the radio access network (3) buffers every incoming application datagram segmented into protocol data units of a radio link control protocol,
**characterized in that** said first network element (20, 22) executes the steps of:
a) linking together a first number of said protocol data units into an unique block (D3, U4);
b) lossless compressing the unique block by a selected compression algorithm (D3, U4);
c) segmenting the compressed unique block into a second number of segments and adding a fictitious header to each segment obtaining in such way a second number of compressed members (D4, U5);
d) multiplexing the compressed members into a set of transport blocks of assigned format (D6, D7; U7, U8);
e) mapping the set of transport blocks onto dedicated channels used for transmitting said compressed members (D8, U9) to a second network element (22, 20) interfaced to the first network element (20, 22) inside the access network (3).

2. The method of claim 1, **characterized in that** said second network element (22, 20) executes the steps of:
f) demultiplexing the compressed members from every set of transport blocks conveyed by dedicated channels (D9, D10, D11; U10, U11, U12);
g) stripping out the fictitious header from every compressed member (D12, U13);
h) linking together the second number of compressed members without fictitious header (D14, U15);
i) decompressing the compressed unique block so obtained (D14, U15);
j) subdividing the unique block into the first number of protocol data units (D15, U16);
k) multiplexing the protocol data units into a set of transport blocks of assigned format (D18, U18);
l) mapping the set of transport blocks onto dedicated channels used for transmitting said protocol data units (D18, U18) to a third network element (4a, 4b, 4c; 6, 7, 9; 8, 5; 13).

3. The method of claim 1, **characterized in that** the length of each compressed segment obtained at step c) is equal to the length of the uncompressed protocol data unit.

4. The method of any claim from 1 to 3, **characterized in that** in step d):
- said protocol data units are multiplexed into data blocks of a standard medium access control protocol, also termed MAC, and
- said MAC blocks are mapped onto transport blocks provided by a protocol of frame type, also termed Frame Protocol.

5. The method of claim 4, **characterized in that** a spare bit of the header of said frame protocol is used for signalling the compressed / uncompressed state of the next protocol data unit to the second network element (22, 20).

6. The method of any claim from 1 to 5, **characterized in that** the bits of said fictitious header are used to convey in-band signalling to the second network element (22, 20).

7. The method of claim 1, **characterized in that**:
- said first network element is a serving radio network controller (5) constituting an access point to the Core network (1) for a specific subscriber station (4a, 4b), and
- said second network element is base station (6, 7) serving said specific subscriber station (4a, 4b).

8. The method of claim 1, **characterized in that**:
- said first network element is base station (6, 7) serving a specific subscriber station (4a, 4b), and
- said second network element is a serving radio network controller (5) constituting an access point to the Core network (1) for said specific subscriber station (4a, 4b).

9. The method of claim 1, **characterized in that**:
- said first network element is a serving radio network controller (5) constituting an access point to the Core network (1) for a specific subscriber station (4b), and
- said second network element is a radio network controller (8) acting as intermediary towards said serving radio network controller (5) for said specific subscriber station (4b).

10. The method of claim 1, **characterized in that**:
- said first network element is a radio network controller (8) acting as intermediary towards a serving radio network controller (5) constituting an access point to the Core network (1) for a specific subscriber station (4b), and
- said second network element is said serving radio network controller (5).

11. The method of claim 1, **characterized in that**:
- said first network element is a radio network controller (8) acting as intermediary towards a serving radio network controller (5) constituting an access point to the Core network (1) for a specific subscriber station (4b), and
- said second network element is base station (9) serving said specific subscriber station (4b).

12. The method of claim 1, **characterized in that**:
- said first network element is base station (9) serving a specific subscriber station (4b), and
- said second network element is a radio network controller (8) acting as intermediary towards a serving radio network controller (5) constituting an access point to the Core network (1) for the specific subscriber station (4b).

13. The method of any claim from 1 to 12, **characterized in that** each incoming protocol data unit is deciphered (U3) before being linked to the others at step a).

14. The method of claim 13, **characterized in that** each compressed member obtained at step c) is re-ciphered (U6) except for the fictitious header.

15. The method of claim 14, **characterized in that** each ciphered compressed member is deciphered again (U14) before being linked to the others at step h) for subsequent decompression.

16. The method of any claim from 1 to 12, **characterized in that** each compressed member obtained at step c) is ciphered (D5), except for the fictitious header.

17. The method of claim 16, **characterized in that** each ciphered compressed member is deciphered (D13) before being linked to the others at step h) for subsequent decompression.

18. The method of claim 17, **characterized in that** each protocol data unit obtained at the subdivision step j) is re-ciphered (D16) before being multiplexed into the MAC blocks.

19. The method of any claim from 13 to 18, **characterized in that** the ciphering/deciphering key is provided by in-band signalling (E1) provided by fictitious header.

20. The method of any claim from 13 to 18, **characterized in that** the ciphering/deciphering key is provided by a dedicated signalling at the control plane.

21. The method of any claim form 1 to 20, **characterized in that** said incoming application datagrams are Internet Protocol datagrams delivered with the best effort criterion.

22. In a cellular communication system, a Radio access network (3) including at least a radio network controller (20) interfaced to at least a base station (22) in its turn accessed by the subscriber stations (4a, 4b, 4c) to exchange application data and signalling with the core network (1, 13, 14) according to structured interface protocols, wherein both radio network controller (20) and the base station (22) are including processing and memory means (PRLC, CHC) configured for:
- segmenting every incoming application datagram into protocol data units of a radio link control protocol and buffering;
**characterized in that** said processing and memory means (PRLC, CHC) are further configured for:
- linking together a first number of said protocol data units into an unique block (D3, U4);
- lossless compressing the unique block by a selected compression algorithm (D3, U4);
- segmenting the compressed unique block into a second number of segments and add a fictitious header to each segment obtaining in such way a second number of compressed members (D4, U5);
- multiplexing the compressed members into a set of transport blocks of assigned format (D6, D7; U7, U8);
- mapping the set of transport blocks onto dedicated channels (D8, U9);
- delivering said dedicated channels (D8, U9) to transmitting means connected to a respective interface existing between said radio network controller (20) and the base station (22).

23. The Radio access network (3) of claim 22, **characterized in that** said processing and memory means (CHC, PRLC) are further configured for:
- receiving said dedicated channels (D9, U9) from receiving means connected to said respective interface;
- demultiplexing the compressed members from every set of transport blocks conveyed by dedicated channels (D9, D10, D11; U10, U11, U12);
- stripping out the fictitious header from every compressed member (D12, U13);
- linking together the second number of compressed members without fictitious header (D14, U15);
- decompressing the compressed unique block (D14, U15);
- subdividing the unique block into the first number of protocol data units (D15, U16);
- multiplexing the protocol data units into a set of transport blocks of assigned format (D18, U18);
- mapping the set of transport blocks onto dedicated channels used for transmitting said protocol data units (D18, U18).

24. The Radio access network (3) of claim 22 or 23, **characterized in that** said processing and memory means (PRLC, CHC) are further configured for ciphering and deciphering said protocol data units and the descending compressed members.
